# EUROPEAN PATENT APPLICATION

(11) **EP 4 807 307 A1**
(43) Date of publication of application: **16.09.2026**
(21) Application number: 24890180.3
(22) Date of filing: 25.07.2024
(51) Int. Cl.: F28F 27/00, F28D 1/00, F25B 39/04, F25B 49/00

(54) **CONTROL METHOD AND SYSTEM FOR HEAT EXCHANGER UNIT**

(30) Priority: 17.11.2023 CN 202311536717
(71) Applicant: Contemporary Amperex Technology Co., Limited, Ningde, Fujian 352100 (CN)
(72) Inventor: LI, Jinkui, Ningde, Fujian 352100 (CN); OUYANG, Shijie, Ningde, Fujian 352100 (CN); LI, Qing, Ningde, Fujian 352100 (CN); HUANG, Xiaoteng, Ningde, Fujian 352100 (CN); YE, Weida, Ningde, Fujian 352100 (CN)
(74) Representative: Kraus & Lederer PartGmbB
(86) International application number: PCT/CN2024/107605
(87) International publication number: WO 2025/102815

(57) **Abstract**

Provided in the present disclosure are a control method and system for a heat exchange unit. The control method includes: determining, based on load information, a target condenser from at least two condensers; determining, based on external environmental information, a target fan from a fan group corresponding to the target condenser; and controlling, based on a current condensing temperature corresponding to the target condenser, the operation of the target fan.

## Description

### CROSS-REFERENCE TO RELATED APPLICATION

The present disclosure is based on, and claims priority to, Chinese Patent Application No. 202311536717.3, filed on November 17, 2023 and entitled "CONTROL METHOD AND SYSTEM FOR HEAT EXCHANGE UNIT", the content of which is incorporated herein by reference in its entirety.

### TECHNICAL FIELD

The present disclosure relates to, but is not limited to, the technical field of energy storage, and in particular, to a control method and system for a heat exchange unit.

### BACKGROUND

In the related art, when the heat exchange unit operates under partial-load or full-load conditions, since the fans corresponding to all condensers operate at the same rotational speed, the energy consumption and noise of the heat exchange unit are relatively high, which severely affects the heat exchange performance and service life of the heat exchange unit.

### SUMMARY

Embodiments of the present disclosure provide a control method and system for a heat exchange unit.

The technical solutions of the embodiments of the present disclosure are implemented as follows:

The embodiments of the present disclosure provide a control method for a heat exchange unit. The heat exchange unit includes at least two condensers and corresponding fan groups respectively disposed opposite to the condensers. The method includes:
determining, based on load information, a target condenser from the at least two condensers;
determining, based on external environmental information, a target fan from a fan group corresponding to the target condenser; and
controlling, based on a current condensing temperature corresponding to the target condenser, an operation of the target fan.

In some embodiments, controlling, based on the current condensing temperature corresponding to the target condenser, the operation of the target fan includes: determining, based on the current condensing temperature corresponding to the target condenser, a current operating frequency of the target fan; and controlling, based on the current operating frequency, the operation of the target fan.

In the embodiments of the present disclosure, in one aspect, the operating frequency of the target fan is determined in real time based on the current condensing temperature corresponding to the target condenser, thereby improving the accuracy of the operating frequency of the fan. In another aspect, the operation of the fan is controlled in real time based on the operating frequency of the fan, such that the fan operates within a set operating frequency range, thereby ensuring the heat exchange performance while meeting requirements for low noise and low energy consumption.

In some embodiments, controlling, based on the current operating frequency, the operation of the target fan includes: in a case where the current operating frequency is less than a minimum operating frequency corresponding to the target fan, updating the current operating power to the minimum operating frequency, and controlling the operation of the target fan based on an updated current operating power; and in a case where the current operating frequency is greater than a maximum operating frequency corresponding to the target fan, updating the current operating power to the maximum operating frequency, and controlling the operation of the target fan based on an updated current operating power.

In the embodiments of the present disclosure, the current operating frequency of the target fan is controlled to be not less than the minimum operating frequency and not greater than the maximum operating frequency, so as to ensure that the fan operates within the range, thereby ensuring the heat exchange performance while meeting requirements for low noise and low energy consumption.

In some embodiments, determining, based on the current condensing temperature corresponding to the target condenser, a current operating frequency of the target fan includes: determining a difference between the current condensing temperature and a minimum condensing temperature corresponding to the target condenser; and determining, based on the difference and a minimum operating frequency corresponding to the target fan, the current operating frequency.

In the embodiments of the present disclosure, firstly, each condenser is provided with a corresponding minimum condensing temperature, which, compared with a case where a uniform minimum condensing temperature is set for all condensers, improves the accuracy and specificity of the minimum condensing temperature. Secondly, each fan is provided with a corresponding minimum operating frequency, which, compared with a case where a uniform minimum operating frequency is set for all fans, improves the accuracy and specificity of the minimum operating frequency. Finally, the current operating frequency is determined based on the current condensing temperature, the minimum condensing temperature, and the minimum operating frequency, thereby improving the accuracy of the current operating frequency of the fan.

In some embodiments, determining, based on the difference and the minimum operating frequency corresponding to the target fan, the current operating frequency includes: determining a product of the difference and a proportion coefficient, where the proportion coefficient is determined based on an operating frequency threshold corresponding to the target fan and a condensing temperature threshold corresponding to the target condenser; and determining, based on a sum of the product and the minimum operating frequency, the current operating frequency.

In the embodiments of the present disclosure, in one aspect, the proportion coefficient is determined based on the operating frequency threshold corresponding to the fan and the condensing temperature threshold, thereby improving the accuracy of the proportion coefficient. In another aspect, the current operating frequency is determined based on the temperature difference, the proportion coefficient, and the minimum operating frequency corresponding to the fan, thereby improving the accuracy of the current operating frequency.

In some embodiments, determining, based on the external environmental information, the target fan from the fan group corresponding to the target condenser includes: in a case where the external environmental information satisfies a first preset condition, determining, based on the target condenser, the target fan from the fan group corresponding to the target condenser; and in a case where the external environmental information does not satisfy the first preset condition, determining a first fan from the fan group corresponding to the target condenser, and selecting the first fan as the target fan.

In the embodiments of the present disclosure, the external environmental information is compared with the first preset condition to determine the target fan, which not only shortens the determination time of the target fan, but also improves the accuracy of the target fan.

In some embodiments, determining, based on the target condenser, the target fan from the fan group corresponding to the target condenser includes: in a case where the target condenser includes a first condenser, determining, based on the current condensing temperature, the target fan from a fan group corresponding to the first condenser; in a case where the target condenser includes a second condenser, selecting at least one fan in a fan group corresponding to the second condenser as the target fan; and in a case where the target condenser includes the first condenser and the second condenser, selecting at least one fan in the fan group corresponding to the first condenser and at least one fan in the fan group corresponding to the second condenser as target fans, where a power of the first condenser is different from a power of the second condenser.

In the embodiments of the present disclosure, firstly, different target condensers use different methods to determine respective target fans, which, compared with a case where the same method is used for all condensers, improves the accuracy and specificity of the target fan. Secondly, the target fan corresponding to the first condenser is determined based on the current condensing temperature, which improves the accuracy of the target fan corresponding to the first condenser. Additionally, the at least one fan corresponding to the second condenser is selected as the target fan, which shortens the determination time of the target fan and improves the determination efficiency. Finally, the target fan is determined from the at least one fan corresponding to the first condenser and the at least one fan corresponding to the second condenser, which not only shortens the determination time, but also ensures the accuracy.

In some embodiments, determining, based on the current condensing temperature, the target fan from the fan group corresponding to the first condenser includes: in a case where the current condensing temperature satisfies a second preset condition, selecting the at least one fan in the fan group corresponding to the first condenser as the target fan; and in a case where the current condensing temperature does not satisfy the second preset condition, determining a second fan from the fan group corresponding to the first condenser, and selecting the second fan as the target fan.

In the embodiments of the present disclosure, in one aspect, by comparing the current condensing temperature with the second preset condition to determine the target fan corresponding to the first condenser, not only is the determination time shortened, but also the accuracy of the target fan is improved. In another aspect, different determination methods are selected for different current condensing temperatures, thereby ensuring the heat exchange performance while meeting requirements for low noise and low energy consumption.

In some embodiments, the method further includes: updating, based on condenser configuration information, the condensing temperature threshold corresponding to the target condenser to obtain the updated condensing temperature threshold; updating, based on the current condensing temperature and the updated condensing temperature threshold, the current operating frequency to obtain the updated current operating frequency; and controlling, based on the updated current operating frequency, the operation of the target fan.

In the embodiments of the present disclosure, the threshold information corresponding to the target condenser is adjusted in real time based on the condenser configuration information; compared with fixed threshold information, this meets the requirements of different users for low noise and low energy consumption, thereby improving users' operational experience.

The embodiments of the present disclosure further provide a control system for a heat exchange unit. The control system for a heat exchange unit includes a heat exchange unit and a control apparatus. The heat exchange unit includes at least two condensers and corresponding fan groups respectively disposed opposite to the condensers.

The control apparatus is configured to: determine, based on load information, a target condenser from the at least two condensers; determine, based on external environmental information, a target fan from a fan group corresponding to the target condenser; and control, based on a current condensing temperature corresponding to the target condenser, an operation of the target fan.

In some embodiments, the external environmental information includes external temperature information, and the heat exchange unit further includes a temperature acquisition component. The control apparatus is further configured to: control the temperature acquisition component to acquire the external temperature information; and determine, based on the external temperature information, the target fan from the fan group corresponding to the target condenser.

In the embodiments of the present disclosure, in one aspect, the temperature acquisition component is integrated in the heat exchange unit to obtain the external temperature information in real time, which, compared with obtaining the external temperature information from other devices, not only reduces the communication distance and improves the accuracy of the external temperature information, but also broadens the application scenarios of the heat exchange unit. In another aspect, the target fan is determined based on the external temperature information, thereby improving the accuracy of the target fan.

In some embodiments, the heat exchange unit further includes a pressure acquisition component; the control apparatus is further configured to: control the pressure acquisition component to acquire a current condensing pressure in the heat exchange unit; and determine, by using a preset correspondence relationship, a target condensing temperature matching the current condensing pressure, and select the target condensing temperature as the current condensing temperature, where the correspondence relationship represents a relationship between at least one condensing pressure and a corresponding condensing temperature.

In the embodiments of the present disclosure, in one aspect, the pressure acquisition component is integrated in the heat exchange unit to obtain the current condensing pressure in real time, which, compared with obtaining the current condensing pressure from other devices, not only reduces the communication distance and improves the accuracy of the current condensing pressure, but also broadens the application scenarios of the heat exchange unit. In another aspect, the target condensing temperature matching the current condensing pressure is determined by using the set correspondence relationship, thereby not only shortening the determination time of the condensing temperature, but also improving the accuracy of the condensing temperature.

In some embodiments, the control apparatus is further configured to: determine, based on the current condensing temperature corresponding to the target condenser, a current operating frequency of the target fan; and control, based on the current operating frequency, the operation of the target fan.

In the embodiments of the present disclosure, in one aspect, the operating frequency of the target fan is determined in real time based on the current condensing temperature corresponding to the target condenser, thereby improving the accuracy of the operating frequency of the fan. In another aspect, the operation of the fan is controlled in real time based on the operating frequency of the fan, such that the fan operates within a set operating frequency range, thereby ensuring the heat exchange performance while meeting requirements for low noise and low energy consumption.

In some embodiments, the control apparatus is further configured to: in a case where the current operating frequency is less than a minimum operating frequency corresponding to the target fan, update the current operating power to the minimum operating frequency, and control the operation of the target fan based on an updated current operating power; and in a case where the current operating frequency is greater than a maximum operating frequency corresponding to the target fan, update the current operating power to the maximum operating frequency, and control the operation of the target fan based on an updated current operating power.

In the embodiments of the present disclosure, the current operating frequency of the target fan is controlled to be not less than the minimum operating frequency and not greater than the maximum operating frequency, so as to ensure that the fan operates within the range, thereby ensuring the heat exchange performance while meeting requirements for low noise and low energy consumption.

In some embodiments, the control apparatus is further configured to: determine a difference between the current condensing temperature and a minimum condensing temperature corresponding to the target condenser; and determine, based on the difference and a minimum operating frequency corresponding to the target fan, the current operating frequency.

In the embodiments of the present disclosure, firstly, each condenser is provided with a corresponding minimum condensing temperature, which, compared with a case where a uniform minimum condensing temperature is set for all condensers, improves the accuracy and specificity of the minimum condensing temperature. Secondly, each fan is provided with a corresponding minimum operating frequency, which, compared with a case where a uniform minimum operating frequency is set for all fans, improves the accuracy and specificity of the minimum operating frequency. Finally, the current operating frequency is determined based on the current condensing temperature, the minimum condensing temperature, and the minimum operating frequency, thereby improving the accuracy of the current operating frequency of the fan.

In some embodiments, the control apparatus is further configured to: determine a product of the difference and a proportion coefficient, where the proportion coefficient is determined based on an operating frequency threshold corresponding to the target fan and a condensing temperature threshold corresponding to the target condenser; and determine, based on a sum of the product and the minimum operating frequency, the current operating frequency.

In the embodiments of the present disclosure, in one aspect, the proportion coefficient is determined based on the operating frequency threshold corresponding to the fan and the condensing temperature threshold, thereby improving the accuracy of the proportion coefficient. In another aspect, the current operating frequency is determined based on the temperature difference, the proportion coefficient, and the minimum operating frequency corresponding to the fan, thereby improving the accuracy of the current operating frequency.

In some embodiments, the at least two condensers are spaced apart from each other along a first direction, and each of the condensers is spaced apart from a corresponding fan group by a preset distance along a second direction to form a cavity, where the second direction is perpendicular to the first direction.

In the embodiments of the present disclosure, the condensers are arranged on one side along the thickness direction and opposite to the fans. In one aspect, the dimension of the heat exchange unit in the width direction is reduced, such that the structural arrangement of the heat exchange unit is more compact and reasonable. In another aspect, airflow in the external environment, after heat exchange with the condenser, can be discharged under the action of the fans without changing direction, resulting in a short airflow discharge path and thereby reducing the load on the fans.

In some embodiments, the heat exchange unit further includes a partition plate assembly. The partition plate assembly is disposed in the cavity and arranged along the second direction, and is configured to divide the cavity into at least two subspaces that are not in communication with each other, where each of the subspaces is respectively in communication with a corresponding condenser and a corresponding fan group, so as to separate airflow in the cavity.

In the embodiments of the present disclosure, the partition plate assembly separates the cavity into a plurality of subspaces that are not in communication with each other at the separation position, such that airflow after heat exchange can only flow in the respective subspace. Additionally, corresponding airflows are respectively discharged under the action of the fans corresponding to the respective subspaces. This can reduce the probability of airflow disturbance caused by airflow after heat exchange due to the action of the fans at different positions in the cavity, and improve the uniformity of airflow distribution and stability of airflow, thereby reducing the noise generated by the fans and the load on the fans, and thus achieving energy saving and noise reduction.

In some embodiments, the heat exchange unit further includes at least two mutually independent refrigerant circuits, and each of the refrigerant circuits is provided with a corresponding condenser; the control apparatus is further configured to control a target refrigerant circuit corresponding to the target condenser to operate, so as to utilize the target refrigerant circuit and the target fan to discharge airflow in a subspace in communication with the target condenser.

In the embodiments of the present disclosure, by providing a plurality of independently operating refrigerant circuits, the heat-exchanged airflow can be discharged under fans corresponding to the respective refrigerant circuits, thereby improving the heat exchange performance of the heat exchange unit.

The embodiments of the present disclosure further provide a control method for a heat exchange unit, applied in a heat exchange unit. The heat exchange unit includes at least two condensers and corresponding fan groups respectively disposed opposite to the condensers. The method includes:
receiving, by the heat exchange unit, a current operating frequency of a target fan, where the current operating frequency is determined based on a current condensing temperature corresponding to a target condenser, the target condenser is determined from the at least two condensers based on load information, and the target fan is determined from a fan group corresponding to the target condenser based on external environmental information; and
operating, based on the current operating frequency, the target fan.

In the embodiments of the present disclosure, the target condenser is determined from the at least two condensers based on load information, the target fan is determined from the fan group corresponding to the target condenser based on external environmental information, and the operation of the target fan is controlled based on the current condensing temperature corresponding to the target condenser. In this way, firstly, the target condenser is determined in real time based on the load information, which can not only meet load requirements, but also reduce power consumption of the heat exchange unit; additionally, a plurality of condensers are deployed in the heat exchange unit to adapt to different load requirements, thereby broadening the application scenarios of the heat exchange unit and better meeting user requirements. Secondly, the target fan is determined in real time based on the external environmental information, which, compared with turning on all fans, improves the accuracy of the target fan while reducing the operating energy consumption of the heat exchange unit. Finally, the operation of the target fan is controlled in real time based on the current condensing temperature corresponding to the target condenser, such that the fan operates within a set operating frequency range, thereby ensuring the heat exchange performance while meeting requirements for low noise and low energy consumption, and thus prolonging the service life of the heat exchange unit.

It should be understood that both the foregoing general description and the following detailed description are exemplary and explanatory and are not construed as limiting the present disclosure.

### BRIEF DESCRIPTION OF THE DRAWINGS

The drawings here are incorporated into the specification and constitute a part of the specification. These drawings illustrate embodiments consistent with the present disclosure and are used in conjunction with the specification to illustrate the technical solutions of the present disclosure.
FIG. 1 is a first schematic flowchart illustrating an implementation of a control method for a heat exchange unit according to an embodiment of the present disclosure;
FIG. 2 is a second schematic flowchart illustrating an implementation of a control method for a heat exchange unit according to an embodiment of the present disclosure;
FIG. 3 is a third schematic flowchart illustrating an implementation of a control method for a heat exchange unit according to an embodiment of the present disclosure;
FIG. 4 is a schematic diagram of a composition structure of a control system for a heat exchange unit according to an embodiment of the present disclosure;
FIG. 5 is a schematic diagram of a composition structure of a heat exchange unit according to an embodiment of the present disclosure;
FIG. 6 is a schematic diagram of a composition of an energy storage apparatus according to an embodiment of the present disclosure;
FIG. 7 is a fourth schematic flowchart illustrating an implementation of a control method for a heat exchange unit according to an embodiment of the present disclosure; and
FIG. 8 is a fifth schematic flowchart illustrating an implementation of a control method for a heat exchange unit according to an embodiment of the present disclosure.

### DETAILED DESCRIPTION

To make the objectives, technical solutions, and advantages of the present disclosure clearer, the present disclosure will be further described in detail below with reference to the drawings. The described embodiments should not be considered as limitations to the present disclosure, and all other embodiments obtained by those of ordinary skill in the art without creative efforts shall fall within the protection scope of the present disclosure.

In the following description, reference is made to "some embodiments", which describe a subset of all possible embodiments, but it can be understood that "some embodiments" may be the same subset or different subsets of all possible embodiments and may be combined with each other without conflict.

In the following description, the terms "first\second\third" involved are used to distinguish similar objects and do not represent a specific ordering of the objects. It can be understood that "first\second\third" can be interchanged with a specific order or sequence where permitted, such that the embodiments of the present disclosure described herein can be implemented in an order other than that illustrated or described herein.

Unless otherwise defined, all technical and scientific terms used herein have the same meaning as commonly understood by those skilled in the art to which the present disclosure belongs. The terms used herein are for the purpose of describing the embodiments of the present disclosure only and are not intended to limit the present disclosure.

Energy storage apparatuses are configured to collect and store excess energy that is temporarily not used within a period of time in a certain manner, and release and utilize the energy at a specific time or in a specific location to improve the energy utilization rate. The energy storage apparatus may be provided with an energy storage compartment; a battery pack is accommodated in the energy storage compartment, and the battery cells in the battery pack usually generate a relatively large amount of heat during use. Therefore, a heat exchange unit and a coolant liquid circuit are provided in the energy storage apparatus. The heat exchange unit may exchange heat with the coolant liquid circuit via a heat exchange circuit to absorb at least a portion of the heat in the coolant liquid, and the cooled coolant liquid cools the battery cells to reduce the risk of excessively high temperatures of the battery cells. The energy storage compartment may be an energy storage container or an energy storage unit in the energy storage container, and the heat exchange unit may be disposed separately from the energy storage compartment. When the energy storage compartment is an energy storage container, the heat exchange unit may be located outside the energy storage container and operate as an independent module. When the energy storage compartment is an energy storage unit in the energy storage container, the heat exchange unit may operate as a module in the energy storage container.

In the related art, when the heat exchange unit operates under partial-load or full-load conditions, since the fans corresponding to all condensers operate at the same rotational speed, the energy consumption and noise of the heat exchange unit are relatively high, which severely affects the heat exchange performance and service life of the heat exchange unit.

The embodiments of the present disclosure provide a control method for a heat exchange unit. Firstly, a target condenser is determined in real time based on load information, which can not only meet load requirements, but also reduce power consumption of the heat exchange unit; additionally, a plurality of condensers are deployed in the heat exchange unit to adapt to different load requirements, thereby broadening the application scenarios of the heat exchange unit and better meeting user requirements. Secondly, a target fan is determined in real time based on external environmental information, which, compared with turning on all fans, improves the accuracy of the target fan while reducing the operating energy consumption of the heat exchange unit. Finally, the operation of the target fan is controlled in real time based on the current condensing temperature corresponding to the target condenser, such that the fan operates within a set operating frequency range, thereby ensuring the heat exchange performance while meeting requirements for low noise and low energy consumption, and thus prolonging the service life of the heat exchange unit. The method according to the embodiments of the present disclosure may be performed by a control apparatus or a heat exchange unit, and the heat exchange unit may be any suitable type of device for any suitable scenario. In some embodiments, the heat exchange unit is further provided with a control apparatus, which may include, but is not limited to, a programmable logic controller (PLC), an upper computer, a mid-range computer, and the like.

The technical solutions in the embodiments of the present disclosure will be clearly and completely described hereinafter with reference to the drawings in the embodiments of the present disclosure.

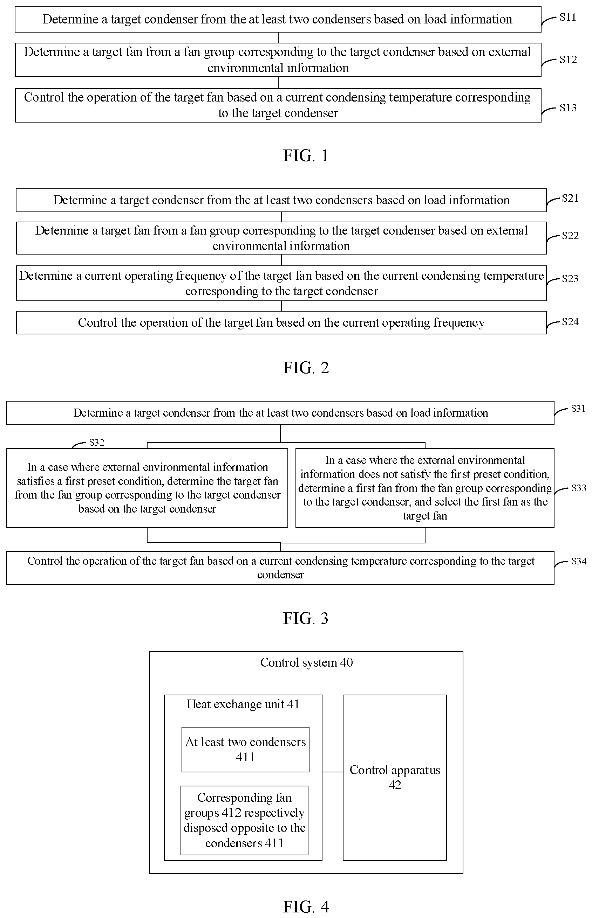

FIG. 1 is a first schematic flowchart illustrating an implementation of a control method for a heat exchange unit according to an embodiment of the present disclosure, applied to a control apparatus. The heat exchange unit includes at least two condensers and corresponding fan groups respectively disposed opposite to the condensers. As shown in FIG. 1, the control method includes steps S11 to S13.

In step S11, a target condenser is determined from the at least two condensers based on load information.

Here, different condensers may have the same or different powers. For example, the at least two condensers include a first condenser having a first power and a second condenser having a second power, where the first power is different from the second power; for example, the first power is greater than the second power, or the first power is less than the second power.

A fan group corresponding to each condenser may include at least one fan. In implementation, the number of fans included in the fan groups corresponding to different condensers may be the same or different. For example, the fan group corresponding to the first condenser includes four fans, and the fan group corresponding to the second condenser includes two fans.

The load information may be any suitable power-related information. For example, the load information is power information, and in implementation, the power of the target condenser is not less than the load information.

The number of target condensers may be at least one. For example, in the case where the power of the first condenser is 25 kilowatt (KW) and the power of the second condenser is 15 KW, if the load information is 20 KW, only the first condenser may be selected as the target condenser, or both the first condenser and the second condenser may be selected as the target condenser.

In step S12, a target fan is determined from a fan group corresponding to the target condenser based on external environmental information.

Here, the external environmental information may be any suitable environmental information, such as temperature and humidity.

The number of fan groups corresponding to the target condenser may be at least one. In some embodiments, for a high-power condenser, a plurality of fan groups are required for heat exchange; for a low-power condenser, heat exchange can be performed by one fan group.

The number of target fans may be at least one. In implementation, the target fan may be a fan in the fan group, a plurality of fans, or all fans in the fan group.

In some embodiments, in the case where the external environmental information satisfies a first preset condition, the target fan is determined based on the target condenser; in the case where the external environmental information does not satisfy the first preset condition, the target fan is determined from a plurality of fans in the fan group. The first preset condition may be any suitable condition, and in implementation, the first preset condition adapts to the external environmental information. For example, in the case where the external environmental information includes an external temperature, the first preset condition may be that the external temperature is not less than a preset temperature. The preset temperature may be any suitable temperature, and in implementation, the preset temperature may be set based on user-defined settings, empirical values, the heat exchange unit, and the like. For example, when the external temperature is greater than the preset temperature, the target fan is determined based on the target condenser, the condensing temperature corresponding to the target condenser, and the like; when the external temperature is not greater than the preset temperature, the target fan is determined based on a preset rule. The preset rule may include, but is not limited to, system configuration of the electronic device, user-defined settings, usage frequency, user operation information, aging degree, and the like. For example, the target fan is configured through a preset configuration interface. For another example, by default, a fan identified by a specific identifier is selected as the target fan. For yet another example, different operational attributes correspond to different target fans; the operational attributes may include, but are not limited to, type, duration, step size, force, and the like.

In step S13, the operation of the target fan is controlled based on a current condensing temperature corresponding to the target condenser.

Here, the current condensing temperature may be acquired in real time, or may be received from other devices. Current condensing temperatures corresponding to different target condensers may be the same or may be different.

Controlling the operation of the target fan includes controlling an operating parameter of the target fan to be within a set range. The operating parameter may be any suitable parameter, such as frequency or rotational speed. For example, the operating frequency of the target fan is adjusted based on the current condensing temperature so as to be within a frequency range; that is, if the current condensing temperature indicates that the operating frequency of the target fan is not within the frequency range, the operating frequency of the target fan is required to be adjusted to be within the frequency range.

In the embodiments of the present disclosure, firstly, the target condenser is determined in real time based on load information, which can not only meet load requirements, but also reduce power consumption of the heat exchange unit; additionally, a plurality of condensers are deployed in the heat exchange unit to adapt to different load requirements, thereby broadening the application scenarios of the heat exchange unit and better meeting user requirements. Secondly, the target fan is determined in real time based on external environmental information, which, compared with turning on all fans, improves the accuracy of the target fan while reducing the operating energy consumption of the heat exchange unit. Finally, the operation of the target fan is controlled in real time based on the current condensing temperature corresponding to the target condenser, such that the fan operates within a set operating frequency range, thereby ensuring the heat exchange performance while meeting requirements for low noise and low energy consumption, and thus prolonging the service life of the heat exchange unit.

In some embodiments, the method further includes steps S141 to S143.

In step S141, the condensing temperature threshold corresponding to the target condenser is updated based on condenser configuration information to obtain the updated condensing temperature threshold.

Here, the condenser configuration information may include any suitable content, such as a target demand and a condensing temperature threshold corresponding to the target fan in response to a current demand. The target/current demand may include, but is not limited to, a quiet operation requirement, a high energy efficiency requirement, and the like. The condensing temperature threshold may include, but is not limited to, a minimum condensing temperature, a maximum condensing temperature, and the like. The method for updating the condensing temperature threshold may include, but is not limited to, increasing or decreasing the condensing temperature threshold. If the target demand is a high energy efficiency requirement, the condensing temperature threshold may be reduced until requirements for high air volume and high energy efficiency are met. For another example, when the target demand is a quiet operation requirement, the condensing temperature threshold may be increased until the quiet operation requirement is met.

In step S142, the current operating frequency of the target fan is updated based on the current condensing temperature and the updated condensing temperature threshold to obtain the updated current operating frequency.

Here, the method for updating the current operating frequency may include, but is not limited to, increasing or decreasing the current operating frequency. In some embodiments, the current operating frequency of the target fan is adjusted based on a preset adjustment period of the target fan. In implementation, different target fans may have the same or different adjustment periods.

In step S143, the operation of the target fan is controlled based on the updated current operating frequency.

Here, the rotational speed of the target fan is adjusted based on the current operating frequency of the target fan, and the target fan is controlled to operate at the rotational speed. In some embodiments, the rotational speed adapted to the current operating frequency may be obtained based on a preset correspondence relationship between the operating frequency and the rotational speed.

In the embodiments of the present disclosure, the threshold information corresponding to the target condenser is adjusted in real time based on the condenser configuration information; compared with fixed threshold information, this meets the requirements of different users for low noise and low energy consumption, thereby improving users' operational experience.

FIG. 2 is a second schematic flowchart illustrating an implementation of a control method for a heat exchange unit according to an embodiment of the present disclosure, applied to a control apparatus. The heat exchange unit includes at least two condensers and corresponding fan groups respectively disposed opposite to the condensers. As shown in FIG. 2, the control method includes steps S21 to S24.

In step S21, a target condenser is determined from the at least two condensers based on load information.

In step S22, a target fan is determined from a fan group corresponding to the target condenser based on external environmental information.

Here, the above steps S21 to S22 correspond to the foregoing steps S11 to S12, respectively, and in implementation, reference may be made to the specific embodiments of the foregoing steps S11 to S12.

In step S23, a current operating frequency of the target fan is determined based on the current condensing temperature corresponding to the target condenser.

Here, the current condensing temperature may be acquired by the heat exchange unit in real time, or may be received from other devices. Different condensing temperatures correspond to different operating frequencies.

In some embodiments, the current operating frequency corresponding to the current condensing temperature may be determined in real time through a pre-established mapping relationship, and the mapping relationship represents a relationship between the condensing temperature and the operating frequency.

In some embodiments, the mapping relationship may be represented by the following formula (1-1), that is: $f \left(n\right) = f \left(l\right) + K \left({T}_{c}-{T}_{min}\right)$
where *f*(*n*) denotes a current operating frequency of the target fan, *f*(*l*) denotes a minimum operating frequency corresponding to the target fan, *T_{c}* denotes a current condensing temperature corresponding to the target condenser, *Tₘᵢₙ* denotes a minimum condensing temperature corresponding to the target condenser, and *K* denotes a proportion coefficient.

The proportion coefficient is determined based on an operating frequency threshold corresponding to the target fan and a condensing temperature threshold corresponding to the target condenser. In some embodiments, the method for determining the proportion coefficient includes, but is not limited to, a first ratio, a weighting/rounding/logarithmic transformation/exponentiation of the first ratio, and the like. The first ratio is a ratio of the difference between operating frequency thresholds to the difference between the condensing temperature thresholds. The operating frequency thresholds include a minimum operating frequency and a maximum operating frequency, and the condensing temperature thresholds include a minimum condensing temperature and a maximum condensing temperature. For example, the first ratio is taken as the proportion coefficient.

In some embodiments, different target fans may correspond to the same or different mapping relationships. For example, for a plurality of fans in the same unit, the mapping relationships may be the same; for a plurality of fans in different units, the mapping relationships may be different. For another example, the mapping relationships for all fans are the same. For yet another example, the mapping relationships for a plurality of fans corresponding to the same condenser may be the same.

In some embodiments, a relationship table between a plurality of condensing temperatures and a plurality of operating frequencies may be pre-established, and a current operating frequency adapted to the current condensing temperature may be rapidly determined through the relationship table. In implementation, if the current condensing temperature is present in the relationship table, an operating frequency corresponding to the current condensing temperature is taken as the current operating frequency. If the current condensing temperature is not included in the relationship table, an operating frequency corresponding to a condensing temperature closest to the current condensing temperature or an average of operating frequencies corresponding to a plurality of condensing temperatures relatively close to the current condensing temperature may be taken as the current operating frequency.

In some embodiments, different target fans may correspond to the same or different relationship tables. For example, for a plurality of fans in the same unit, the relationship tables may be the same; for a plurality of fans in different units, the relationship tables may be different. For another example, the relationship tables for a plurality of fans corresponding to the same condenser may be the same.

In some embodiments, the current operating frequency may be determined based on the current condensing temperature, the condensing temperature threshold corresponding to the target condenser, and the minimum operating frequency corresponding to the target fan.

In some embodiments, step S23 includes steps S231 to S232.

In step S231, a difference between the current condensing temperature and the minimum condensing temperature corresponding to the target condenser is determined.

Here, the difference is a difference between the current condensing temperature and the minimum condensing temperature. In some embodiments, the difference *T_{d}* may be determined by the following formula (1-2), that is: ${T}_{d} = {T}_{c} - {T}_{min}$
where *T_{c}* denotes a current condensing temperature corresponding to the target condenser, and *Tₘᵢₙ* denotes a minimum condensing temperature corresponding to the target condenser.

In step S232, the current operating frequency is determined based on the difference and the minimum operating frequency corresponding to the target fan.

Here, the method for determining the current operating frequency may include, but is not limited to, a sum, a weighting/rounding/logarithmic transformation/exponentiation of the sum, and the like. The sum is a sum of a product and the minimum operating frequency, and the product is a product of the difference and the proportion coefficient.

In some embodiments, step S232 includes steps S2321 to S2322.

In step S2321, a product of the difference and a proportion coefficient is determined.

Here, the proportion coefficient is determined based on an operating frequency threshold corresponding to the target fan and a condensing temperature threshold corresponding to the target condenser. In some embodiments, the method for determining the proportion coefficient includes, but is not limited to, a first ratio, a weighting/rounding/logarithmic transformation/exponentiation of the first ratio, and the like. The first ratio is a ratio of the difference between operating frequency thresholds to the difference between the condensing temperature thresholds.

In some embodiments, the proportion coefficient *K* may be determined by the following formula (1-3), that is: $K = \frac{f \left(h\right) - f \left(l\right)}{{T}_{max} - {T}_{min}}$
where *f*(*h*) denoted a maximum operating frequency corresponding to the target fan, *f*(*l*) denotes a minimum operating frequency corresponding to the target fan, *Tₘᵢₙ* denotes a minimum condensing temperature corresponding to the target condenser, and *Tₘₐₓ* denotes a minimum condensing temperature corresponding to the target condenser.

The product is a product of a difference and a proportion coefficient. In some embodiments, the product P may be determined by the following formula (1-4), that is: $P = K ∗ {T}_{d}$
where *T_{d}* denotes a difference, and *K* denotes a proportion coefficient.

In step S2322, the current operating frequency is determined based on a sum of the product and the minimum operating frequency.

Here, the method for determining the current operating frequency may include, but is not limited to, the sum, a weighting/rounding/logarithmic transformation/exponentiation of the sum, and the like. For example, the sum is taken as the current operating frequency.

In some embodiments, the current operating frequency *f*(*n*) may be determined by the following formula (1-5), that is: $f \left(n\right) = f \left(l\right) + P$
where *f*(*l*) denotes a minimum operating frequency corresponding to the target fan, and *P* denotes a product.

In this way, in one aspect, the proportion coefficient is determined based on the operating frequency threshold corresponding to the fan and the condensing temperature threshold, thereby improving the accuracy of the proportion coefficient. In another aspect, the current operating frequency is determined based on the temperature difference, the proportion coefficient, and the minimum operating frequency corresponding to the fan, thereby improving the accuracy of the current operating frequency.

In the embodiments of the present disclosure, a difference between the current condensing temperature and a minimum condensing temperature corresponding to the target condenser is determined, and the current operating frequency is determined based on the difference and the minimum operating frequency corresponding to the target fan. Firstly, each condenser is provided with a corresponding minimum condensing temperature, which, compared with a case where a uniform minimum condensing temperature is set for all condensers, improves the accuracy and specificity of the minimum condensing temperature. Secondly, each fan is provided with a corresponding minimum operating frequency, which, compared with a case where a uniform minimum operating frequency is set for all fans, improves the accuracy and specificity of the minimum operating frequency. Finally, the current operating frequency is determined based on the current condensing temperature, the minimum condensing temperature, and the minimum operating frequency, thereby improving the accuracy of the current operating frequency of the fan.

In step S24, the operation of the target fan is controlled based on the current operating frequency.

Here, the rotational speed of the target fan is adjusted based on the current operating frequency of the target fan, and the target fan is controlled to operate at the rotational speed. In the case where the current operating frequency of the target fan is not within a frequency range, the current operating frequency of the target fan needs to be adjusted to be within the frequency range.

In some embodiments, step S24 includes step S241 and/or step S242.

In step S241, in the case where the current operating frequency is less than a minimum operating frequency corresponding to the target fan, the current operating power is updated to the minimum operating frequency, and the operation of the target fan is controlled based on the updated current operating power.

Here, different target fans correspond to the same or different operating frequency thresholds. The operating frequency threshold may include, but is not limited to, a minimum operating frequency and a maximum operating frequency. In the case where the current operating frequency is less than the minimum operating frequency, the current operating frequency is required to be adjusted to the minimum operating frequency, such that the target fan operates at the minimum operating frequency.

In step S242, in the case where the current operating frequency is greater than a maximum operating frequency corresponding to the target fan, the current operating power is updated to the maximum operating frequency, and the operation of the target fan is controlled based on the updated current operating power.

Here, if the current operating frequency is greater than the maximum operating frequency, the current operating frequency is required to be adjusted to the maximum operating frequency, such that the target fan operates at the maximum operating frequency.

In this way, the current operating frequency of the target fan is controlled to be not less than the minimum operating frequency and not greater than the maximum operating frequency, so as to ensure that the fan operates within the range, thereby ensuring the heat exchange performance while meeting requirements for low noise and low energy consumption.

In the embodiments of the present disclosure, in one aspect, the operating frequency of the target fan is determined in real time based on the current condensing temperature corresponding to the target condenser, thereby improving the accuracy of the operating frequency of the fan. In another aspect, the operation of the fan is controlled in real time based on the operating frequency of the fan, such that the fan operates within a set operating frequency range, thereby ensuring the heat exchange performance while meeting requirements for low noise and low energy consumption.

FIG. 3 is a third schematic flowchart illustrating an implementation of a control method for a heat exchange unit according to an embodiment of the present disclosure, applied to a control apparatus. The heat exchange unit includes at least two condensers and corresponding fan groups respectively disposed opposite to the condensers. As shown in FIG. 3, the control method includes steps S31 to S34.

In step S31, a target condenser is determined from the at least two condensers based on load information.

Here, the above step S31 corresponds to the foregoing step S11, and in implementation, reference may be made to the specific embodiments of the foregoing step S11.

In step S32, in the case where the external environmental information satisfies a first preset condition, the target fan is determined, based on the target condenser, from the fan group corresponding to the target condenser.

Here, the external environmental information may be any suitable environmental information, such as temperature and humidity. The first preset condition may be any suitable condition. In implementation, the first preset condition adapts to the external environmental information.

The number of target fans may be at least one. In implementation, the target fan may be a fan in the fan group, a plurality of fans, or all fans in the fan group.

The method for determining the target fan may include, but is not limited to, the number of target condensers, the power of the target condenser, the current condensing temperature corresponding to the target condenser, and the like. In some embodiments, the number of target condensers may be at least one, and the power of each condenser may be different. For example, the target condenser includes a first condenser and/or a second condenser, where the power of the first condenser is different from the power of the second condenser. For example, the power of the first condenser is greater than the power of the second condenser. For example, if the power of the first condenser is 25 KW and the power of the second condenser is 15 KW, the fan group corresponding to the first condenser may include at least one group, and the fan group corresponding to the second condenser may be one group.

In some embodiments, "determining, based on the target condenser, the target fan from the fan group corresponding to the target condenser" in step S32 includes at least one of steps S321 to S323.

In step S321, in the case where the target condenser includes a first condenser, the target fan is determined, based on the current condensing temperature, from a fan group corresponding to the first condenser.

Here, the number of fan groups corresponding to the first condenser may be at least one, for example, two. Each fan group may include at least one fan, for example, two fans, and in this case, the number of fans corresponding to the first condenser is four. In some embodiments, different numbers or different fans are selected for different condensing temperatures.

In some embodiments, "determining, based on the current condensing temperature, the target fan from the fan group corresponding to the first condenser" in step S321 includes step S3211 and/or step S3212.

In step S3211, in the case where the current condensing temperature satisfies a second preset condition, at least one fan in the fan group corresponding to the first condenser is selected as the target fan.

Here, the second preset condition may be any suitable condition, for example, greater than a set temperature threshold. In implementation, all fans in the fan group corresponding to the first condenser may be selected as target fans. In implementation, since the current condensing temperature is relatively high, all fans corresponding to the first condenser may be turned on to accelerate heat exchange.

In step S3212, in the case where the current condensing temperature does not satisfy the second preset condition, a second fan is determined from the fan group corresponding to the first condenser, and the second fan is selected as the target fan.

Here, the second fan may be determined based on a preset rule. The number of second fans may be at least two. The preset rule may include, but is not limited to, system configuration of the electronic device, user-defined settings, usage frequency, user operation information, aging degree, and the like. For example, by default, two fans in the first fan group are selected as second fans. For another example, different operational attributes correspond to different second fans; the operational attributes may include, but are not limited to, type, duration, step size, force, and the like. For yet another example, two fans with a relatively low aging degree in the first condenser are selected as second fans. In implementation, since the current condensing temperature is relatively low, some of the fans corresponding to the first condenser may be turned on, so as to reduce the power of the fans and improve the operational energy efficiency of the system.

In this way, in one aspect, by comparing the current condensing temperature with the second preset condition to determine the target fan corresponding to the first condenser, not only is the determination time shortened, but also the accuracy of the target fan is improved. In another aspect, different determination methods are selected for different current condensing temperatures, thereby ensuring the heat exchange performance while meeting requirements for low noise and low energy consumption.

In step S322, in the case where the target condenser includes a second condenser, at least one fan in a fan group corresponding to the second condenser is selected as the target fan.

Here, the power of the second condenser is different from the power of the first condenser. In some embodiments, the power of the second condenser is less than the power of the first condenser. In implementation, since the ambient temperature is relatively high, all fans corresponding to the second condenser may be turned on to accelerate heat exchange.

In step S323, in the case where the target condenser includes the first condenser and the second condenser, at least one fan in the fan group corresponding to the first condenser and at least one fan in the fan group corresponding to the second condenser are selected as target fans.

Here, the number of target fans is at least two. When the heat exchange unit operates under full-load conditions, since the ambient temperature is relatively high, all fans corresponding to all condensers are required to be turned on to accelerate heat exchange.

In the embodiments of the present disclosure, in the case where the target condenser includes a first condenser, the target fan is determined, based on the current condensing temperature, from a fan group corresponding to the first condenser; in the case where the target condenser includes a second condenser, at least one fan in a fan group corresponding to the second condenser is selected as the target fan; in the case where the target condenser includes the first condenser and the second condenser, at least one fan in the fan group corresponding to the first condenser and at least one fan in the fan group corresponding to the second condenser are selected as target fans. In this way, firstly, different target condensers use different methods to determine respective target fans, which, compared with a case where the same method is used for all condensers, improves the accuracy and specificity of the target fan. Secondly, the target fan corresponding to the first condenser is determined based on the current condensing temperature, which improves the accuracy of the target fan corresponding to the first condenser. Additionally, the at least one fan corresponding to the second condenser is selected as the target fan, which shortens the determination time of the target fan and improves the determination efficiency. Finally, the target fan is determined from the at least one fan corresponding to the first condenser and the at least one fan corresponding to the second condenser, which not only shortens the determination time, but also ensures the accuracy.

In step S33, in the case where external environmental information does not satisfy the first preset condition, a first fan is determined from the fan group corresponding to the target condenser, and the first fan is selected as the target fan.

Here, the first fan may be determined based on a preset rule, and the number of first fans may be at least one. The preset rule may include, but is not limited to, system configuration of the electronic device, user-defined settings, usage frequency, user operation information, aging degree, and the like. For example, by default, a fan, identified by a preset identifier in the first fan group, is selected as the first fan. For another example, different operational attributes correspond to different first fans; the operational attributes may include, but are not limited to, type, duration, step size, force, and the like. For yet another example, a fan with a minimum aging degree in the target condenser is selected as the first fan. In implementation, since the current ambient temperature is relatively low, some of the fans corresponding to the portion of the condensers may be turned on, so as to reduce the power of the fans and improve the operational energy efficiency of the system.

In step S34, the operation of the target fan is controlled based on a current condensing temperature corresponding to the target condenser.

Here, the above step S34 corresponds to the foregoing step S13, and in implementation, reference may be made to the specific embodiments of the foregoing step S13.

In the embodiments of the present disclosure, the external environmental information is compared with the first preset condition to determine the target fan, which not only shortens the determination time of the target fan, but also improves the accuracy of the target fan.

Based on the above embodiments, the embodiments of the present disclosure further provide a control system for a heat exchange unit. FIG. 4 is a schematic diagram of a composition structure of a control system for a heat exchange unit according to an embodiment of the present disclosure. As shown in FIG. 4, the control system 40 includes a heat exchange unit 41 and a control apparatus 42. The heat exchange unit 41 includes at least two condensers 411 and corresponding fan groups 412 respectively disposed opposite to the condensers 411.

The control apparatus 42 is configured to: determine, based on load information, a target condenser from the at least two condensers; determine, based on external environmental information, a target fan from a fan group corresponding to the target condenser; and control, based on a current condensing temperature corresponding to the target condenser, the operation of the target fan.

Here, the control apparatus 42 may be any suitable apparatus capable of implementing the function, for example, a PLC. The load information may be any suitable power-related information. Different condensers may have the same or different powers. The number of target condensers may be at least one, and for the method for determining the target condenser by the control apparatus 42, reference may be made to the specific embodiments of the foregoing step S11. The number of target fans may also be at least one, and for the method for determining the target fan by the control apparatus 42, reference may be made to the specific embodiments of the foregoing step S12, or steps S32 to S33. For the control of the operation of the target fan by the control apparatus 42, reference may be made to the specific embodiments of the foregoing step S13, or steps S23 to S24.

In some embodiments, the at least two condensers are spaced apart from each other along a first direction, and each of the condensers is spaced apart from a corresponding fan group by a preset distance along a second direction to form a cavity, where the second direction is perpendicular to the first direction.

Here, the first direction may be a thickness direction of the heat exchange unit, and the second direction may be a width direction of the heat exchange unit. The preset distance may be any suitable distance.

In this way, the condensers are arranged on one side along the thickness direction and opposite to the fans. In one aspect, the dimension of the heat exchange unit in the width direction is reduced, such that the structural arrangement of the heat exchange unit is more compact and reasonable. In another aspect, airflow in the external environment, after heat exchange with the condenser, can be discharged under the action of the fans without changing direction, resulting in a short airflow discharge path and thereby reducing the load on the fans.

In some embodiments, the heat exchange unit 41 further includes a partition plate assembly. The partition plate assembly is disposed in the cavity and arranged along the second direction, and is configured to divide the cavity into at least two subspaces that are not in communication with each other. Each subspace is respectively in communication with a corresponding condenser and a corresponding fan group, so as to separate airflow in the cavity.

Here, the number of partition plate assemblies may be at least one. The number of subspaces corresponds to the number of partition plate assemblies. For example, when the number of partition plate assemblies is one, the number of subspaces may be two. When the number of partition plate assemblies is two, the number of subspaces may be three. In some embodiments, the position of the partition plate assembly may be fixed or rotatable. For example, the position of the partition plate assembly is adjusted through any suitable driving mechanism.

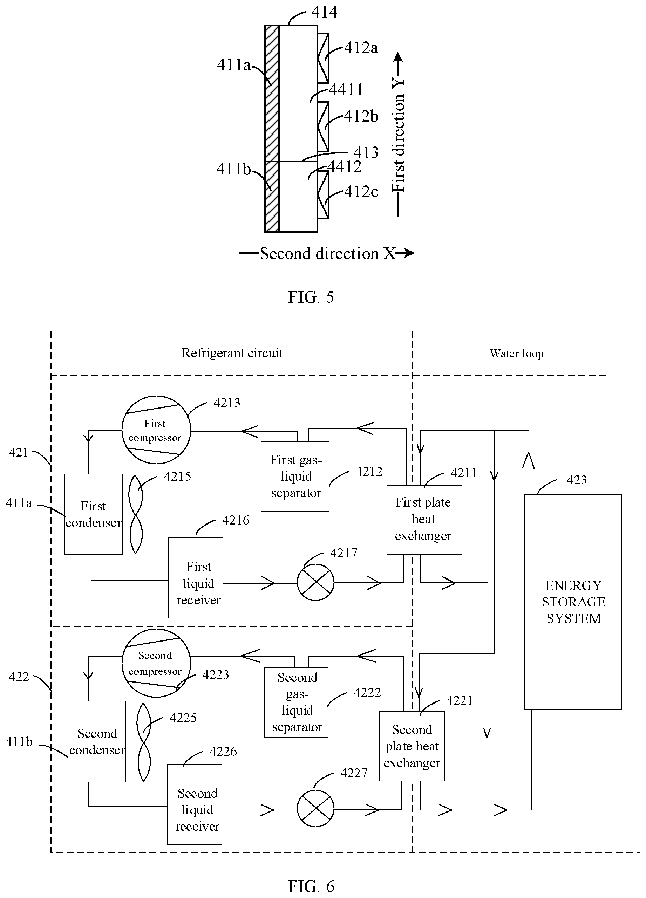

FIG. 5 is a schematic diagram of a composition structure of a heat exchange unit according to an embodiment of the present disclosure. As shown in FIG. 5, the heat exchange unit 41 includes a first condenser 411a, a second condenser 411b, a first fan group 412a and a second fan group 412b that correspond to the first condenser 411a, a third fan group 412c corresponding to the second condenser 411b, and a partition plate assembly 413.

The first condenser 411a and the second condenser 411b are arranged along a first direction Y;

The first fan group 412a, the second fan group 412b, and the third fan group 412c are spaced apart from each other along the first direction Y.

The partition plate assembly 413 is located in a cavity 414 and arranged along a second direction X to divide the cavity 414 into a subspace 4141 and a subspace 4142. In implementation, airflows between the subspace 4141 and the subspace 4142 flow only in the respective corresponding subspaces, without the likelihood of airflow disturbance or air recirculation short-circuiting.

In this way, the partition plate assembly separates the cavity into a plurality of subspaces that are not in communication with each other at the separation position, such that airflow after heat exchange can only flow in the respective subspace. Additionally, corresponding airflows are respectively discharged under the action of the fans corresponding to the respective subspaces. This can reduce the probability of airflow disturbance caused by airflow after heat exchange due to the action of the fans at different positions in the cavity, and improve the uniformity of airflow distribution and stability of airflow, thereby reducing the noise generated by the fans and the load on the fans, and thus achieving energy saving and noise reduction.

In some embodiments, the heat exchange unit 41 further includes at least two mutually independent refrigerant circuits, and each refrigerant circuit is provided with a corresponding condenser. The control apparatus 42 is further configured to control a target refrigerant circuit corresponding to the target condenser to operate, so as to utilize the target refrigerant circuit and the target fan to discharge airflow in a subspace in communication with the target condenser.

Here, the refrigerant circuit is configured to exchange heat with airflow in the external environment, and the airflow after heat exchange flows in the corresponding subspace and is discharged from the subspace under the action of airflow generated by the target fan. In implementation, the number of refrigerant circuits corresponds to the number of condensers.

FIG. 6 is a schematic diagram of a composition of an energy storage apparatus according to an embodiment of the present disclosure. As shown in FIG. 6, the storage apparatus includes a first refrigerant circuit 421, a second refrigerant circuit 422, and an energy storage system 423.

In the case where the first refrigerant circuit 421 is in an operating state, a refrigerant in the first refrigerant circuit 421 exchanges heat with a coolant liquid in a water circuit via a first plate heat exchanger 4211. The refrigerant absorbs heat and becomes a low-pressure superheated gas. After passing through the first gas-liquid separator 4212, the low-pressure superheated gas is compressed by the first compressor 4213 into a high-temperature and high-pressure gas, and then the heat of the high-temperature and high-pressure gas is rejected to the air via a condenser fan 4215 corresponding to a first condenser 411a. The high-temperature and high-pressure gas rejects heat in the first condenser 411a and becomes a high-pressure saturated liquid or subcooled liquid. After passing through a first liquid receiver 4216 and a first throttling valve 4217, the high-temperature and high-pressure gas becomes a low-temperature and low-pressure two-phase mixture. The low-temperature and low-pressure two-phase mixture then passes through the first plate heat exchanger 4211 for evaporation and heat absorption, and enters the first compressor 4213, completing the refrigerant cycle, thereby transferring the heat from the energy storage system 423 to the outside. The coolant liquid in the water circuit, after its temperature is reduced, enters the energy storage system 423 for battery cooling.

In the case where the first refrigerant circuit 422 is in an operating state, a refrigerant in the second refrigerant circuit 422 exchanges heat with a coolant liquid in the water circuit via a second plate heat exchanger 4221. The refrigerant absorbs heat and becomes a low-pressure superheated gas. After passing through the second gas-liquid separator 4222, the low-pressure superheated gas is compressed by the second compressor 4223 into a high-temperature and high-pressure gas, and then the heat of the high-temperature and high-pressure gas is rejected to the air via a condenser fan 4225 corresponding to a second condenser 411b. The high-temperature and high-pressure gas rejects heat in the second condenser 411b and becomes a high-pressure saturated liquid or subcooled liquid. After passing through a second liquid receiver 4226 and a second throttling valve 4227, the high-temperature and high-pressure gas becomes a low-temperature and low-pressure two-phase mixture. The low-temperature and low-pressure two-phase mixture then passes through the second plate heat exchanger 4221 for evaporation and heat absorption, and enters the second compressor 4223, completing the refrigerant cycle, thereby transferring the heat from the energy storage system 423 to the outside. The coolant liquid in the water circuit, after its temperature is reduced, enters the energy storage system 423 for battery cooling.

In this way, by providing a plurality of independently operating refrigerant circuits, the heat-exchanged airflow can be discharged under fans corresponding to the respective refrigerant circuits, thereby improving the heat exchange performance of the heat exchange unit.

In some embodiments, the external environmental information includes external temperature information, and the heat exchange unit 41 further includes a temperature acquisition component. The control apparatus 42 is further configured to: control the temperature acquisition component to acquire the external temperature information; and determine, based on the external temperature information, the target fan from the fan group corresponding to the target condenser.

Here, the temperature acquisition component may be any suitable component capable of acquiring temperature, such as a temperature sensor. In some embodiments, the control apparatus 42 may send an acquisition instruction to the temperature acquisition component, such that the temperature acquisition component acquires current external temperature information. The acquisition instruction may include any suitable content, and the acquisition instruction is used to acquire external temperature information. In implementation, for the method for determining the target fan by the control apparatus 42, reference may be made to the specific embodiments of the foregoing steps S32 to S33.

In this way, in one aspect, the temperature acquisition component is integrated in the heat exchange unit to obtain the external temperature information in real time, which, compared with obtaining the external temperature information from other devices, not only reduces the communication distance and improves the accuracy of the external temperature information, but also broadens the application scenarios of the heat exchange unit. In another aspect, the target fan is determined based on the external temperature information, thereby improving the accuracy of the target fan.

In some embodiments, the heat exchange unit 41 further includes a pressure acquisition component; the control apparatus 42 is further configured to: control the pressure acquisition component to acquire a current condensing pressure in the heat exchange unit; and determine, by using a preset correspondence relationship, a target condensing temperature matching the current condensing pressure, and select the target condensing temperature as the current condensing temperature.

Here, the pressure acquisition component may be any suitable component capable of acquiring pressure, such as a pressure sensor. In some embodiments, the control apparatus 42 may send an acquisition instruction to the pressure acquisition component, such that the pressure acquisition component acquires the current condensing pressure. The acquisition instruction may include any suitable content, and the acquisition instruction is used to acquire the current condensing pressure.

The correspondence relationship represents a relationship between at least one condensing pressure and a corresponding condensing temperature. In implementation, the correspondence relationship may be pre-established, and in this case, a condensing temperature matching the current condensing pressure may be obtained based on the correspondence relationship. In some embodiments, if the current condensing pressure is present in the correspondence relationship, the condensing temperature corresponding to the current condensing pressure is taken as the target condensing temperature; if the current condensing pressure is not included in the correspondence relationship, a condensing temperature corresponding to a condensing pressure closest to the current condensing pressure or an average of condensing temperatures corresponding to a plurality of condensing pressures relatively close to the current condensing pressure may be taken as the target condensing temperature.

In this way, in one aspect, the pressure acquisition component is integrated in the heat exchange unit to obtain the current condensing pressure in real time, which, compared with obtaining the current condensing pressure from other devices, not only reduces the communication distance and improves the accuracy of the current condensing pressure, but also broadens the application scenarios of the heat exchange unit. In another aspect, the target condensing temperature matching the current condensing pressure is determined by using the set correspondence relationship, thereby not only shortening the determination time of the condensing temperature, but also improving the accuracy of the condensing temperature.

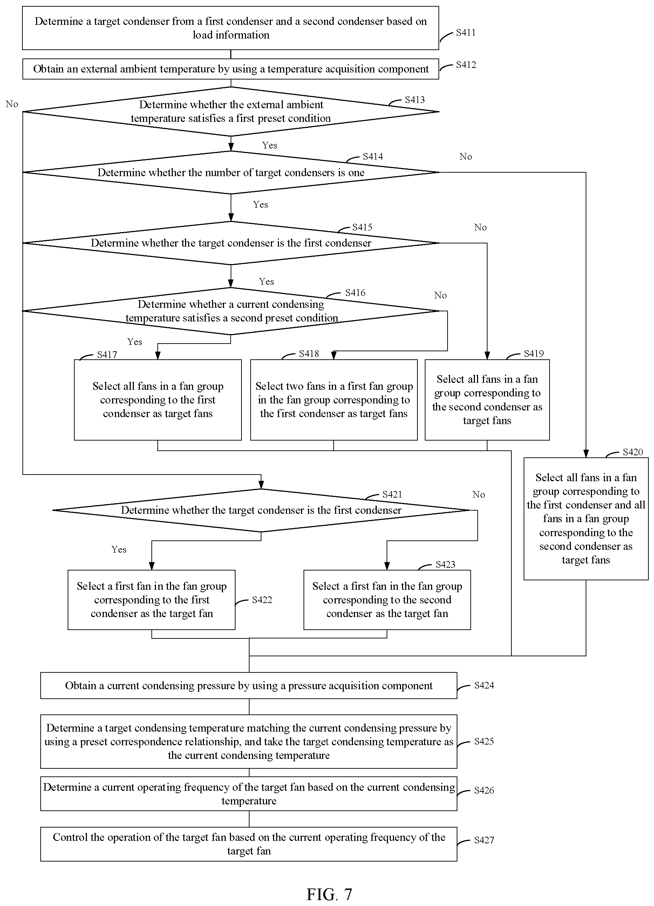

FIG. 7 is a fourth schematic flowchart illustrating an implementation of a control method for a heat exchange unit according to an embodiment of the present disclosure. As shown in FIG. 7, the method includes steps S411 to S427.

In step S411, a target condenser is determined from a first condenser and a second condenser based on load information.

In step S412, an external ambient temperature (corresponding to the external environmental information described above) is obtained by using a temperature acquisition component.

In step S413, it is determined whether the external ambient temperature satisfies a first preset condition; if so, the process proceeds to step S414; otherwise, the process proceeds to step S421.

In step S414, it is determined whether the number of target condensers is one; if so, the process proceeds to step S415; otherwise, the process proceeds to step S420.

In step S415, it is determined whether the target condenser is the first condenser; if so, the process proceeds to step S416; otherwise, the process proceeds to step S419.

In step S416, it is determined whether a current condensing temperature satisfies a second preset condition; if so, the process proceeds to step S417; otherwise, the process proceeds to step S418.

In step S417, all fans in a fan group corresponding to the first condenser are selected as target fans, and the process proceeds to step S424.

In step S418, two fans (corresponding to the second fans described above) in a first fan group in the fan group corresponding to the first condenser are selected as target fans, and the process proceeds to step S424.

In step S419, all fans in a fan group corresponding to the second condenser are selected as target fans, and the process proceeds to step S424.

In step S420, all fans in a fan group corresponding to the first condenser and all fans in a fan group corresponding to the second condenser are selected as target fans, and the process proceeds to step S424.

In step S421, it is determined whether the target condenser is the first condenser; if so, the process proceeds to step S422; otherwise, the process proceeds to step S423.

In step S422, a first fan (corresponding to the first fan described above) in the fan group corresponding to the first condenser is selected as the target fan, and the process proceeds to step S424.

In step S423, a first fan (corresponding to the first fan described above) in the fan group corresponding to the second condenser is selected as the target fan, and the process proceeds to step S424.

In step S424, a current condensing pressure is obtained by using a pressure acquisition component.

In step S425, a target condensing temperature matching the current condensing pressure is determined by using a preset correspondence relationship, and the target condensing temperature is taken as the current condensing temperature.

In step S426, a current operating frequency of the target fan is determined based on the current condensing temperature.

Here, for the method for determining the current operating frequency, reference may be made to the specific embodiments of the foregoing step S23.

In step S427, the operation of the target fan is controlled based on the current operating frequency of the target fan.

Here, the current operating frequency of the target fan is adjusted to be within a set frequency range.

In some embodiments, a condensing temperature threshold corresponding to the target condenser may be dynamically adjusted based on condenser configuration information.

In the embodiments of the present disclosure, firstly, the target condenser is determined in real time based on load information, which can not only meet load requirements, but also reduce power consumption of the heat exchange unit; additionally, a plurality of condensers are deployed in the heat exchange unit to adapt to different load requirements, thereby broadening the application scenarios of the heat exchange unit and better meeting user requirements. Secondly, the target fan is determined in real time based on external environmental information, which, compared with turning on all fans, improves the accuracy of the target fan while reducing the operating energy consumption of the heat exchange unit. Finally, the operation of the target fan is controlled in real time based on the current condensing temperature corresponding to the target condenser, such that the fan operates within a set operating frequency range, thereby ensuring the heat exchange performance while meeting requirements for low noise and low energy consumption, and thus prolonging the service life of the heat exchange unit.

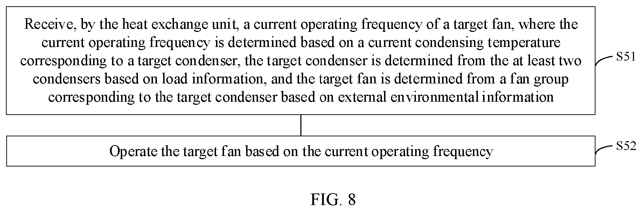

FIG. 8 is a fifth schematic flowchart illustrating an implementation of a control method for a heat exchange unit according to an embodiment of the present disclosure, applied to a heat exchange unit. The heat exchange unit includes at least two condensers and corresponding fan groups respectively disposed opposite to the condensers. As shown in FIG. 8, the control method includes steps S51 to S52.

In step S51, the heat exchange unit receives a current operating frequency of a target fan, where the current operating frequency is determined based on a current condensing temperature corresponding to a target condenser, the target condenser is determined from the at least two condensers based on load information, and the target fan is determined from a fan group corresponding to the target condenser based on external environmental information.

Here, the heat exchange unit may communicate with a control apparatus in real time to obtain a current operating frequency of the target fan. For the method for determining the target fan and the current operating frequency, reference may be made to the specific embodiments of the foregoing steps S21 to S24.

In step S52, the target fan is operated based on the current operating frequency.

Here, the target fan operates based on the current operating frequency.

In the embodiments of the present disclosure, firstly, the target condenser is determined in real time based on load information, which can not only meet load requirements, but also reduce power consumption of the heat exchange unit; additionally, a plurality of condensers are deployed in the heat exchange unit to adapt to different load requirements, thereby broadening the application scenarios of the heat exchange unit and better meeting user requirements. Secondly, the target fan is determined in real time based on external environmental information, which, compared with turning on all fans, improves the accuracy of the target fan while reducing the operating energy consumption of the heat exchange unit. Finally, the operation of the target fan is controlled in real time based on the current condensing temperature corresponding to the target condenser, such that the fan operates within a set operating frequency range, thereby ensuring the heat exchange performance while meeting requirements for low noise and low energy consumption, and thus prolonging the service life of the heat exchange unit.

It should be understood that reference throughout the specification to "one embodiment" or "an embodiment" means that particular features, structures, or characteristics related to the embodiment are included in at least one embodiment of the present disclosure. Thus, "in one embodiment" or "in an embodiment" appearing in various places throughout the specification does not necessarily refer to the same embodiment. Furthermore, these particular features, structures, or characteristics may be combined in any suitable manner in one or more embodiments. It should be understood that in various embodiments of the present disclosure, the numerical order of the processes described above does not imply the sequence of execution. The execution order of the processes should be determined by their functions and internal logic, and should not impose any limitation on the implementation of the embodiments of the present disclosure. The serial numbers of the embodiments of the present disclosure are for description, and do not represent the superiority or inferiority of the embodiments. It should be noted that the terms "comprise", "include", or any other variants thereof herein are intended to cover non-exclusive inclusion, such that a process, method, article, or apparatus that includes a list of elements includes not only those elements but may also include other elements not explicitly listed or inherent to such process, method, article, or apparatus. In the absence of further limitations, an element limited by the phrases "comprising a..." and "including a..." does not exclude the presence of additional identical elements in a process, method, article, or apparatus that includes the element.

In the several embodiments provided in the present disclosure, it should be understood that the disclosed devices and methods may be implemented in other ways. The above-described device embodiments are illustrative. For example, the division of the units is a division based on logical function, and it can be implemented in other ways in actual situations. For example, multiple units or assemblies may be combined or integrated into another system, or some features may be omitted or not executed. In addition, the coupling, direct coupling, or communication connection between each component that is shown or discussed may be indirect coupling or communication connection via some interfaces, devices, or units, and it may be in electrical, mechanical, or other forms. The units described above as separate parts may or may not be physically separate, and parts displayed as units may or may not be physical units; that is, they may be located in one place or distributed across a plurality of network units. Some or all of the units may be selected based on an actual requirement to achieve the objectives of the solutions of the embodiments. In addition, all functional units in the embodiments of the present disclosure may be integrated into one processing unit, or each unit may be used as a separate unit, or two or more units may be integrated into one unit. The above integrated unit may be implemented in the form of hardware, or may be implemented in the form of hardware plus a software functional unit.

The above descriptions are embodiments of the present disclosure, but the protection scope of the present disclosure is not limited thereto. Any variations or substitutions that can be easily conceived by those skilled in the art within the technical scope disclosed in the present disclosure shall all fall within the protection scope of the present disclosure.

### INDUSTRIAL APPLICABILITY

Embodiments of the present disclosure provide a control method and system for a heat exchange unit. The heat exchange unit includes at least two condensers and corresponding fan groups respectively disposed opposite to the condensers. The control method includes: determining, based on load information, a target condenser from the at least two condensers; determining, based on external environmental information, a target fan from a fan group corresponding to the target condenser; and controlling, based on a current condensing temperature corresponding to the target condenser, the operation of the target fan. In this way, firstly, the target condenser is determined in real time based on the load information, which can not only meet load requirements, but also reduce power consumption of the heat exchange unit; additionally, a plurality of condensers are deployed in the heat exchange unit to adapt to different load requirements, thereby broadening the application scenarios of the heat exchange unit and better meeting user requirements. Secondly, the target fan is determined in real time based on the external environmental information, which, compared with turning on all fans, improves the accuracy of the target fan while reducing the operating energy consumption of the heat exchange unit. Finally, the operation of the target fan is controlled in real time based on the current condensing temperature corresponding to the target condenser, such that the fan operates within a set operating frequency range, thereby ensuring the heat exchange performance while meeting requirements for low noise and low energy consumption, and thus prolonging the service life of the heat exchange unit.

## Claims

1. A control method for a heat exchange unit, wherein the heat exchange unit comprises at least two condensers and corresponding fan groups respectively disposed opposite to the condensers, the method comprising:
determining, based on load information, a target condenser from the at least two condensers;
determining, based on external environmental information, a target fan from a fan group corresponding to the target condenser; and
controlling, based on a current condensing temperature corresponding to the target condenser, an operation of the target fan.

2. The control method according to claim 1, wherein controlling, based on the current condensing temperature corresponding to the target condenser, the operation of the target fan comprises:
determining, based on the current condensing temperature corresponding to the target condenser, a current operating frequency of the target fan; and
controlling, based on the current operating frequency, the operation of the target fan.

3. The control method according to claim 2, wherein controlling, based on the current operating frequency, the operation of the target fan comprises:
in a case where the current operating frequency is less than a minimum operating frequency corresponding to the target fan, updating the current operating power to the minimum operating frequency, and controlling the operation of the target fan based on an updated current operating power; and
in a case where the current operating frequency is greater than a maximum operating frequency corresponding to the target fan, updating the current operating power to the maximum operating frequency, and controlling the operation of the target fan based on an updated current operating power.

4. The control method according to claim 2 or 3, wherein determining, based on the current condensing temperature corresponding to the target condenser, a current operating frequency of the target fan comprises:
determining a difference between the current condensing temperature and a minimum condensing temperature corresponding to the target condenser; and
determining, based on the difference and a minimum operating frequency corresponding to the target fan, the current operating frequency.

5. The control method according to claim 4, wherein determining, based on the difference and the minimum operating frequency corresponding to the target fan, the current operating frequency comprises:
determining a product of the difference and a proportion coefficient, wherein the proportion coefficient is determined based on an operating frequency threshold corresponding to the target fan and a condensing temperature threshold corresponding to the target condenser; and
determining, based on a sum of the product and the minimum operating frequency, the current operating frequency.

6. The control method according to any one of claims 1 to 5, wherein determining, based on the external environmental information, the target fan from the fan group corresponding to the target condenser comprises:
in a case where the external environmental information satisfies a first preset condition, determining, based on the target condenser, the target fan from the fan group corresponding to the target condenser; and
in a case where the external environmental information does not satisfy the first preset condition, determining a first fan from the fan group corresponding to the target condenser, and selecting the first fan as the target fan.

7. The control method according to claim 6, wherein determining, based on the target condenser, the target fan from the fan group corresponding to the target condenser comprises:
in a case where the target condenser comprises a first condenser, determining, based on the current condensing temperature, the target fan from a fan group corresponding to the first condenser;
in a case where the target condenser comprises a second condenser, selecting at least one fan in a fan group corresponding to the second condenser as the target fan; and
in a case where the target condenser comprises the first condenser and the second condenser, selecting at least one fan in the fan group corresponding to the first condenser and at least one fan in the fan group corresponding to the second condenser as target fans;
wherein a power of the first condenser is different from a power of the second condenser.

8. The control method according to claim 7, wherein determining, based on the current condensing temperature, the target fan from the fan group corresponding to the first condenser comprises:
in a case where the current condensing temperature satisfies a second preset condition, selecting at least one fan in the fan group corresponding to the first condenser as the target fan; and
in a case where the current condensing temperature does not satisfy the second preset condition, determining a second fan from the fan group corresponding to the first condenser, and selecting the second fan as the target fan.

9. The control method according to any one of claims 1 to 8, wherein the method further comprises:
updating, based on condenser configuration information, the condensing temperature threshold corresponding to the target condenser to obtain the updated condensing temperature threshold;
updating, based on the current condensing temperature and the updated condensing temperature threshold, a current operating frequency of the target fan to obtain an updated current operating frequency; and
controlling, based on the updated current operating frequency, the operation of the target fan.

10. A control system for a heat exchange unit, comprising a heat exchange unit and a control apparatus, wherein the heat exchange unit comprises at least two condensers and corresponding fan groups respectively disposed opposite to the condensers;
the control apparatus is configured to: determine, based on load information, a target condenser from the at least two condensers; determine, based on external environmental information, a target fan from a fan group corresponding to the target condenser; and control, based on a current condensing temperature corresponding to the target condenser, an operation of the target fan.

11. The control system according to claim 10, wherein the external environmental information comprises external temperature information, and the heat exchange unit further comprises a temperature acquisition component;
the control apparatus is further configured to: control the temperature acquisition component to acquire the external temperature information; and determine, based on the external temperature information, the target fan from the fan group corresponding to the target condenser.

12. The control system according to claim 10 or 11, wherein the heat exchange unit further comprises a pressure acquisition component;
the control apparatus is further configured to: control the pressure acquisition component to acquire a current condensing pressure in the heat exchange unit; and determine, by using a preset correspondence relationship, a target condensing temperature matching the current condensing pressure, and select the target condensing temperature as the current condensing temperature, wherein the correspondence relationship represents a relationship between at least one condensing pressure and a corresponding condensing temperature.

13. The control system according to any one of claims 10 to 12, wherein the control apparatus is further configured to:
determine, based on the current condensing temperature corresponding to the target condenser, a current operating frequency of the target fan; and control, based on the current operating frequency, the operation of the target fan.

14. The control system according to claim 13, wherein the control apparatus is further configured to:
in a case where the current operating frequency is less than a minimum operating frequency corresponding to the target fan, update the current operating power to the minimum operating frequency, and control the operation of the target fan based on an updated current operating power; and
in a case where the current operating frequency is greater than a maximum operating frequency corresponding to the target fan, update the current operating power to the maximum operating frequency, and control the operation of the target fan based on an updated current operating power.

15. The control system according to claim 13 or 14, wherein the control apparatus is further configured to:
determine a difference between the current condensing temperature and a minimum condensing temperature corresponding to the target condenser; and
determine, based on the difference and a minimum operating frequency corresponding to the target fan, the current operating frequency.

16. The control system according to claim 15, wherein the control apparatus is further configured to:
determine a product of the difference and a proportion coefficient, wherein the proportion coefficient is determined based on an operating frequency threshold corresponding to the target fan and a condensing temperature threshold corresponding to the target condenser; and
determine, based on a sum of the product and the minimum operating frequency, the current operating frequency.

17. The control system according to any one of claims 10 to 16, wherein the at least two condensers are spaced apart from each other along a first direction, and each of the condensers is spaced apart from a corresponding fan group by a preset distance along a second direction to form a cavity; the second direction is perpendicular to the first direction.

18. The control system according to claim 17, wherein the heat exchange unit further comprises a partition plate assembly;
the partition plate assembly is disposed in the cavity and arranged along a second direction, and is configured to divide the cavity into at least two subspaces that are not in communication with each other, wherein each of the subspaces is respectively in communication with a corresponding condenser and a corresponding fan group, so as to separate airflow in the cavity.

19. The control system according to any one of claims 10 to 18, wherein the heat exchange unit further comprises at least two mutually independent refrigerant circuits, and each of the refrigerant circuits is provided with a corresponding condenser;
the control apparatus is further configured to control a target refrigerant circuit corresponding to the target condenser to operate, so as to utilize the target refrigerant circuit and the target fan to discharge airflow in a subspace in communication with the target condenser.

20. A control method for a heat exchange unit, applied in a heat exchange unit, wherein the heat exchange unit comprises at least two condensers and corresponding fan groups respectively disposed opposite to the condensers, the method comprising:
receiving, by the heat exchange unit, a current operating frequency of a target fan, wherein the current operating frequency is determined based on a current condensing temperature corresponding to a target condenser, the target condenser is determined from the at least two condensers based on load information, and the target fan is determined from a fan group corresponding to the target condenser based on external environmental information; and
operating, based on the current operating frequency, the target fan.
